Europäisches Patentamt

European Patent Office

Office européen des brevets

(19)

(11) Publication number: **0 060 519**
A2

(12) # EUROPEAN PATENT APPLICATION

(21) Application number: 82101951.0

(22) Date of filing: 11.03.82

(51) Int. Cl.³: **H 02 M 3/335, H 02 P 13/22**

(30) Priority: 13.03.81 JP 35362/81

(43) Date of publication of application: 22.09.82
Bulletin 82/38

(84) Designated Contracting States: DE IT

(71) Applicant: Hitachi, Ltd., 5-1, Marunouchi 1-chome, Chiyoda-ku Tokyo 100 (JP)

(72) Inventor: Ito, Syoichi, 171-10, Suwama Tohkai-mura, Naka-gun Ibaraki-ken (JP)
Inventor: Tajima, Kunio, 4-4-44, Higashikanesawa-cho Hitachi-shi, Ibaraki-ken (JP)
Inventor: Enomoto, Junichi, 5-30-14, Higashikanesawa-cho Hitachi-shi, Ibaraki-ken (JP)
Inventor: Nagaoka, Masanobu, 2-1-3, Kokubu-cho Hitachi-shi, Ibaraki-ken (JP)

(74) Representative: Patentanwälte Beetz sen. - Beetz jr. Timpe - Siegfried - Schmitt-Fumian, Steinsdorfstrasse 10, D-8000 München 22 (DE)

(54) **Power source device.**

(57) A rectifier circuit (201) for converting an A.C.voltage into D.C. is comprised. An output of the rectifier circuit (201) is converted into a high-frequency A.C.voltage by a high-frequency switching circuit (202). An output of the high-frequency switching circuit (202) is converted into a high-frequency sinusoidal wave by a resonance circuit (203). A synchronous detector circuit (204) detects a point of time at which the high-frequency sinusoidal current delivered from the resonance circuit (203) becomes zero. A pulse width control circuit (205) controls the pulse width of the output of the high-frequency switching circuit (202) so that the high-frequency switching circuit (202) may turn «on» at the zero point of the high-frequency sinusoidal current as detected by the synchronous detector circuit (204), and that it may turn «off» when the output current of the resonance circuit (203) has reached a predetermined value.

## POWER SOURCE DEVICE

BACKGROUND OF THE INVENTION:

The present invention relates to power source devices, and more particularly to a power source device suitable for use in copying machines.

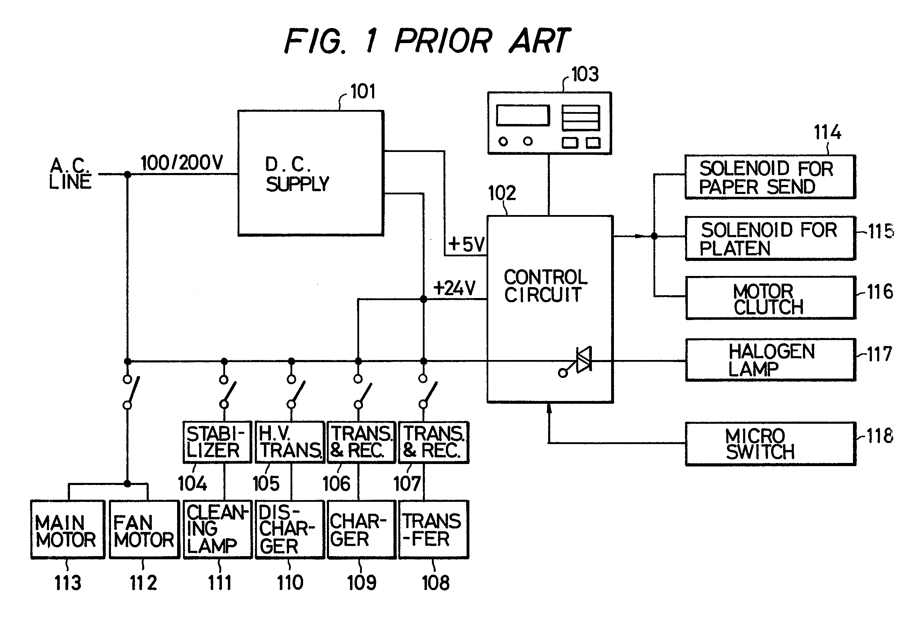

Figure 1 shows the electric system of a copying machine including a prior-art power source device. The copying machine includes a micro switch 118 for detecting the operation of paper feed or the movement of a platen, a solenoid 114 for executing the paper feed operation in the copying machine, a solenoid 115 for operating the platen, a clutch 116 for operating a motor, and a halogen lamp 117 serving as a light source for exposure. A control circuit 102 is disposed for the sequence control of the copying machine, and a control panel 103 includes control keys, indicating lamps, etc. A cleaning lamp 111 applies a potential to matters adherent to the drum of the copying machine and renders the potential of the adherent matters null so as to facilitate the removal of the adherent matters, and it is provided with a stabilizer 104. A discharger 110 generates A.C. corona so as to facilitate the removal of the adherent matters on the drum of the copying machine, and it is supplied with a high-voltage A.C. by a high-voltage transformer 105. A charger 109 electrifies the drum of the copying machine, and it is supplied with a high-voltage D.C. by a transformer and rectifier 106. A transfer 108 causes toner adherent on the drum of the copying machine to adhere onto a piece of copying paper, and it is supplied with a high-voltage D.C. by a transformer and rectifier 107. A main motor 113 is disposed for effecting the rotation of the drum of the copying machine, the paper feed, and the movement of the platen, while a fan motor 112 is disposed for cooling. A D.C. supply 101 is disposed in order to supply D.C. voltages to the control circuit 102 and the transformers and rectifiers 106 and 107.

The power source device as described above involves a plurality of power sources, i. e., A.C. and D.C. sources of low voltages and high-voltage sources of A.C. and D.C., and the individual power sources require control functions. This leads to the disadvantage that the whole device becomes large in size. Since the cleaning lamp 111 is lit up with a commercial power supply, it requires the stabilizer 104 corresponding to the supply voltage and frequency of the power supply. This leads to the disadvantage that the sorts of components increase.

SUMMARY OF THE INVENTION:

An object of the present invention is to provide a power source device which can be made small in size and constructed of a small number of components even when a large number of power sources are used.

Another object of the present invention is to provide a power source device which generates noise little.

Still another object of the present invention is to provide a power source device which exhibits / a high efficiency of power supply.

In order to accomplish the objects, according to the present invention, a rectangular wave voltage obtained by rectifying and smoothing the supply voltage of a commercial power supply and then switching the resultant voltage at a high frequency is converted into a high-frequency sinusoidal wave voltage by a resonance circuit, and the output of a high-frequency switching circuit is controlled so as to turn "on" a pulse width controller in synchronism with the zero point of the output current of the resonance circuit, whereby D.C. and A.C. sources of low voltages and D.C. and A.C. sources of high voltages are obtained on the basis of the high-frequency sinusoidal wave voltage.

Since the present invention produces the desired voltages from the output rendered high in frequency, constituents to be connected posterior to the resonance circuit can be made small in size. As a result, the size of the whole power source device can be made small.

The present invention obtains the sinusoidal wave from the resonance circuit in such a way that the rise of the pulse of the high-frequency switching circuit and the point of time when the output current of the resonance circuit becomes zero are synchronized by a synchronous detector. Therefore, the sinusoidal wave which is obtained from the resonance circuit is stable. Accordingly, high-frequency noise do not develop from the constituents which are connected posterior to the resonance circuit.

Further, since the present invention obtains the sinusoidal wave by synchronizing the rise of the pulse of the high-frequency switching circuit with the zero point of the output current of the resonance circuit, almost no loss is involved at the turn-on of the high-frequency switching circuit, so that the efficiency of the power supply is high.

BRIEF DESCRIPTION OF THE DRAWINGS:

Figure 1 is a diagram of an example of the electric system of a copying machine in a prior art.

Figure 2 is a block diagram of a power source device according to the present invention.

Figure 3 is a circuit arrangement diagram of an embodiment of the present invention.

Figure 4 is a circuit arrangement diagram of a controller in Figure 3.

Figure 5 is a circuit arrangement diagram of a high-voltage protection circuit in Figure 3.

Figure 6 is a waveform diagram for explaining the operation of the circuit shown in Figure 3.

DETAILED DESCRIPTION OF THE PREFERRED EMBODIMENTS:

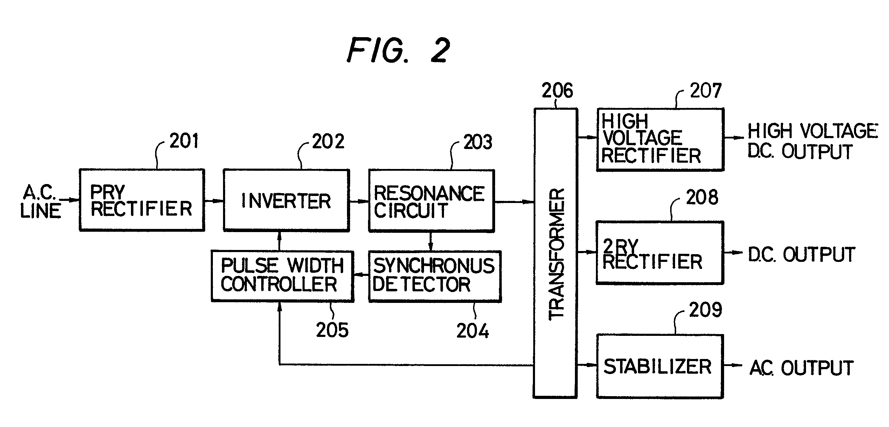

Referring to Figure 2, the power source device of the present invention is constructed of a primary rectifier 201, a high-frequency switching circuit (inverter) 202, a resonance circuit 203, a synchronous detector 204, a pulse width controller 205, a transformer 206, a high-voltage rectifier 207, a secondary rectifier 208 and a stabilizer 209. The primary rectifier 201 rectifies an A.C. input and delivers a rectified output. The inverter 202 converts the output of the primary rectifier 201 into a rectangular wave, and delivers the latter. The resonance circuit 203 converts the output of the inverter 202 into a sinusoidal wave by the resonance action, and delivers the latter. The transformer 206 transmits the output of the resonance circuit 203 to the high-voltage rectifier 207, secondary rectifier 208 and stabilizer 209. The synchronous detector 204 detects the point of time at which the output current of the resonance circuit 203 becomes zero. The pulse width controller 205 makes controls so that the output pulse of the inverter 202 may rise at the zero point of the output current of the resonance circuit 203 as detected by the synchronous detector 204, and that it may fall when the output of the transformer 206 has become a desired value.

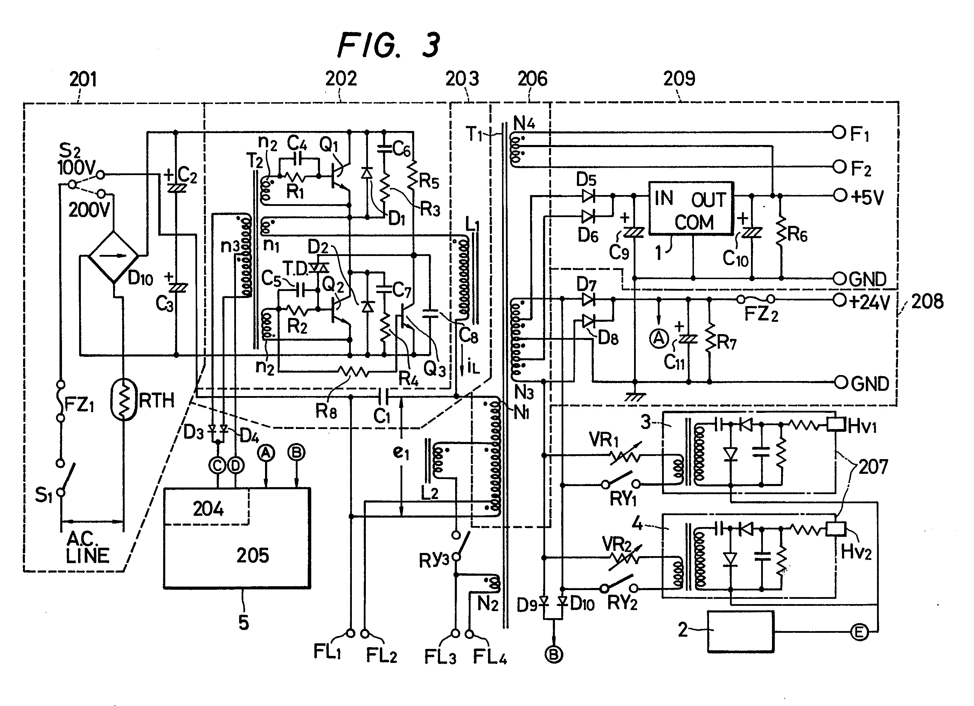

Figure 3 shows the details of the circuit shown in Figure 2. In Figure 3, the same numerals as in Figure 2 indicate the same circuit constituents.

In the arrangement of Figure 3, symbol $S_1$ denotes a power switch, symbol $FZ_1$ a fuse, symbol $S_2$ a change-over switch, symbol $D_{10}$ a rectifier, symbols $C_2$ and $C_3$ smoothing capacitors, and symbol RTH a thermistor for power. They constitute a power supply rectifying and smoothing circuit, and through the change-over switch $S_2$, this circuit performs the double-voltage rectification when the commercial A.C. power supply is of 100 V and the full-wave rectification when it is of 200 V. In this case, the power thermistor RTH limits rush current at the closure of the power supply. Next, a self-oscillation circuit of the current feedback type is constructed of transistors $Q_1$ and $Q_2$, diodes $D_1$ and $D_2$, and the windings $n_1$, $n_2$ and $n_2'$ of a control transformer $T_2$. The control winding $n_3$ of the control transformer $T_2$ subjects the output of the self-oscillation circuit to the pulse width modulation. Resistors $R_1$ and $R_2$ and capacitors $C_4$ and $C_5$ raise the speed of a switching operation. Further, resistors $R_3$ and $R_4$ and capacitors $C_6$ and $C_7$ reduce the switching losses of the transistors $Q_1$ and $Q_2$. On the other hand, a transistor $Q_3$, a trigger diode TD, a capacitor $C_8$ and resistors $R_5$ and $R_8$ constitute a starting circuit, which assures the start at the closure of the power supply. In the next place, a reactor $L_1$ and a capacitor $C_1$ constitute a series resonance circuit, which is driven by the switching of the transistors $Q_1$ and $Q_2$ and which supplies a high-frequency transformer $T_1$ with a high-frequency voltage of sinusoidal wave. When the circuit for speeding up the switching operation and the circuit for reducing the switching losses are not taken into consideration, the self-oscillation circuit operates as stated below.

The output rectified by the primary rectifier 201 is applied to the capacitor $C_8$ through the resistor $R_5$. When the charging current of the capacitor $C_8$ has reached a predetermined value, the trigger diode TD is rendered conductive, and the transistor $Q_2$ is consequently rendered conductive. Upon the conduction of the transistor $Q_2$, current flows from the winding $n_2{}'$ to the base of the transistor $Q_2$. When the current has flowed through

the winding $n_2'$, current flows from the winding $n_1$ to the node of the capacitors $C_2$ and $C_3$ via the reactance $L_1$ and the capacitor $C_1$. When the discharging from the capacitor $C_8$ to the trigger diode TD has ended, charges stored in the capacitor $C_1$ flow from the reactance $L_1$ toward the winding $n_1$. Thus, current flows from the winding $n_2$ to the base of the transistor $Q_1$, so that the transistor $Q_1$ is rendered conductive. Thenceforth, the transistors $Q_2$ and $Q_1$ turn "on" alternately, and the high-frequency sinusoidal wave is generated from the resonance circuit 203.

The high-frequency transformer $T_1$ transforms the sinusoidal high-frequency voltage produced by the series resonance circuit, into a desired necessary voltage. Further, it has the function of insulating the lines of the commercial A.C. power supply and the secondary circuit. Next, output terminals $FL_1$ - $FL_4$ are output terminals for a cleaning lamp. A filament voltage is provided between the terminals $FL_1$ and $FL_2$ and between those $FL_3$ and $FL_4$, while a discharge voltage is provided between the terminals $FL_1$, $FL_2$ and $FL_3$, $FL_4$. The cleaning lamp is directly connected to the four terminals, and is lit up at a high frequency. Symbol $L_2$ indicates a stabilizer, which stabilizes the current of the cleaning lamp. Symbol $RY_3$ indicates a relay contact, which is controlled "on" and "off" by a driver circuit not shown.
In the next place, output terminals $F_1$ and $F_2$ provide
a high-frequency A.C. voltage output, which is used
as the filament voltage of a fluorescent indicating
lamp on a control panel. An output terminal +5V provides
an output which is used for a copying machine-control
circuit, and which is such that the high-frequency
voltage from the secondary winding $N_3$ of the high-
frequency transformer $T_1$ is rectified and smoothed
by rectifiers $D_5$ and $D_6$ and a capacitor $C_9$, whereupon
the resultant voltage is passed through a D.C. voltage
stabilizer (3-terminal IC regulator) 1 in order to
attain a predetermined stability. An output terminal
+24V provides the supply voltages of a D.C. solenoid,
a motor clutch, etc., and its output is produced in
such a way that a high-frequency voltage from the secondary
winding $N_3$ of the high-frequency transformer $T_1$ is
rectified and smoothed by diodes $D_7$ and $D_8$ and a capacitor
$C_{11}$. A fuse $FZ_2$ serves for protection against short-
circuiting. Output terminals $HV_1$ and $HV_2$ are D.C. high-voltage
output terminals, the output voltages of which are
respectively used for generating charging corona and
for generating transfer corona. The D.C. high voltage
of the terminal $HV_1$ is produced in such a way that
the high-frequency voltage from the secondary winding $N_3$

of the high-frequency transformer $T_1$ is supplied to a high-voltage unit 3 through an adjusting variable resistor $VR_1$ as well as a relay contact $RY_1$, and that it is boosted by a boosting transformer and then rectified. The output of the terminal $HV_2$ is similarly produced. Next, numeral 2 designates a high-voltage protection circuit. When the high-voltage output ($HV_1$, $HV_2$) has caused the abnormality of short-circuit or overcurrent, the protection circuit 2 cuts off the high-voltage output so as to secure safety and to prevent the burning of circuitry. Diodes $D_9$ and $D_{10}$ serve to feed back the output voltage. They feed the input voltage of the high-voltage unit requiring a stability, back to a control circuit 5, thereby to produce a favorable result.

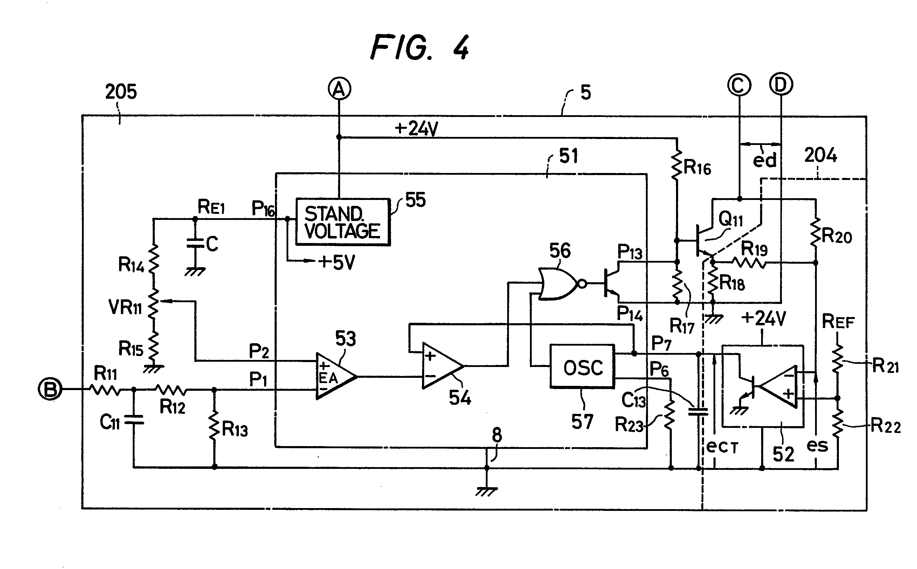

The control circuit 5 controls the whole device. As shown in Figure 4, it is constructed of a reference voltage generating portion; a controlling integrated circuit 51 which includes an error amplifier, a comparator, an oscillator, etc.; a comparator 51; an output transistor $Q_{11}$; etc.

Referring to Figure 4, a reference voltage REF is divided by a resistor $R_{14}$, a variable resistor $VR_{11}$ and a resistor $R_{15}$, and the divided voltage is applied to the plus input of the error amplifier EA. The minus input of the error amplifier EA is supplied with a feedback voltage produced in such a way that the output of the feedback voltage rectifying diodes $D_9$ and $D_{10}$ is rectified and smoothed by a resistor $R_{11}$ and a capacitor $C_{11}$ and that the resultant voltage is divided by resistors $R_{12}$ and $R_{13}$. The comparator 52 is of the open collector output type. The plus input terminal of the comparator is supplied with a D.C. voltage of about 0.1 V obtained by dividing the reference voltage REF. The minus input terminal of the comparator is supplied with a voltage $e_s$ which is produced by a network composed of the transistor $Q_{11}$ and resistors $R_{18}$, $R_{19}$ and $R_{20}$ and the tertiary winding $n_3$ of the control transformer $T_2$. The output of the comparator delivers the detection signal of the zero point of the current of the reactor $L_1$ of the resonance circuit 203. In this case, when the detection signal has been delivered, charges in a capacitor $C_{13}$ are discharged, and the terminal voltage $e_{CT}$ of this capacitor becomes the null potential. The output voltage $e_{CT}$ of the capacitor $C_{13}$ is applied to the oscillator OSC. A resistor $R_{23}$ is a resistor which determines the frequency of the oscillator OSC. In this regard, since the switching frequency of the present embodiment is determined by the components $L_1$ and $C_1$ of the resonance circuit 203, the oscillation frequency to be determined by the output voltages of the resistor $R_{23}$ and the

capacitor $C_{13}$ is set at a magnitude lower than the aforementioned switching frequency. The terminals $P_{13}$ and $P_{14}$ of the controlling integrated circuit 51 are output terminals for the pulse width modulation control (hereinbelow, abbreviated to "PWM control"), and they drive the transistor $Q_{11}$. The comparator in the IC 51 is shown at numeral 54, and numeral 56 denotes a NOR circuit.

Here, the resistor 18 connected to the emitter of the transistor $Q_{11}$ is a resistor for detecting current, and its resistance is a small value on the order of several ohms. The collector of the transistor $Q_{11}$ is connected to the tertiary winding $n_3$ of the control transformer $T_2$ through a terminal ⓒ and diodes $D_3$ and $D_4$, so that the tertiary winding $n_3$ is short-circuited by the turn-on of the transistor $Q_{11}$. By the short-circuit of the tertiary winding $n_3$, the current feedback from the primary winding $n_1$ to the secondary winding $n_2$ or $n_2'$ is prevented, so that the transistor $Q_1$ or $Q_2$ turns "off". In this manner, the operation of the PWM control is carried out by turning "off" the switching transistors $Q_1$ and $Q_2$ by short-circuiting the tertiary winding $n_3$ of the control transformer $T_2$ for a required interval within one cycle in which the current feedback proceeds. Now, the network consisting of the resistors

$R_{18}$, $R_{19}$ and $R_{20}$ serves to detect the zero point of the current $i_L$ of the reactor $L_1$. The current $i_L$ is detected by the voltage division of the resistors $R_{20}$ and $R_{19}$ during the "off" period of the transistor $Q_{11}$, while it is detected by the resistor $R_{18}$ during the "on" period of the transistor $Q_{11}$. The detection output is applied to the comparator 52, and the timing capacitor $C_{13}$ is discharged at the zero point of the current $i_L$.

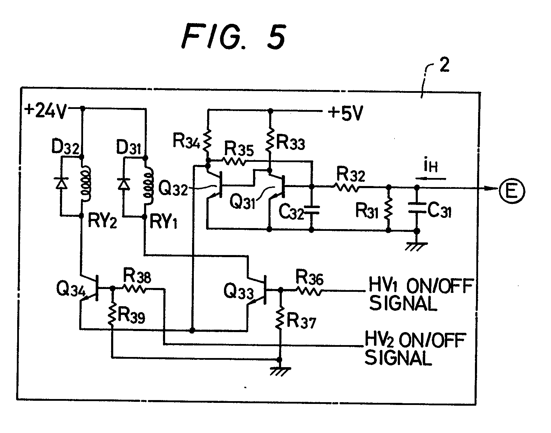

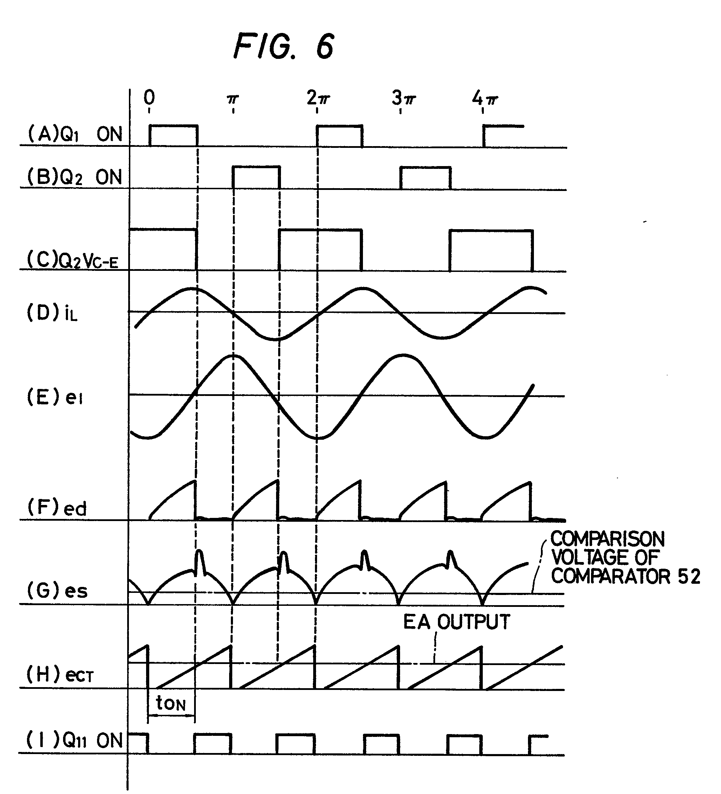

Figure 5 is a diagram showing the detailed arrangement of the high-voltage protection circuit 2. This circuit includes transistors $Q_{33}$ and $Q_{34}$ for driving relays $RY_1$ and $RY_2$ respectively, and transistors $Q_{31}$ and $Q_{32}$ for detecting an overcurrent of high voltage. The transistors $Q_{31}$ and $Q_{32}$ construct a flip-flop through a positive feedback resistor $R_{35}$. In the initial state, the transistor $Q_{31}$ is "off" and the transistor $Q_{32}$ is "on". Therefore, the transistors $Q_{33}$ and $Q_{34}$ turn "on" or "off" in response to their input signals and thus control the respective high-voltage outputs ($HV_1$, $HV_2$) through the relays $RY_1$ and $RY_2$. When the high-voltage output has been short-circuited or overloaded and a current $i_H$ has exceeded a predetermined value, the transistor $Q_{31}$ turns "on", and the other transistor $Q_{32}$ turns "off", whereby the transistors $Q_{33}$ and $Q_{34}$ turn "off". This state is maintained until the power supply is closed again. Waveforms in the essential portions of the circuit thus far described are illustrated at (A) - (I) in Figure 6. The operating frequency of the circuit constructed in this manner is determined by the oscillation frequency of the resonance circuit, that is, the period of the current $i_L$ (Figure 6, (D)). The operation of the PWM control is executed by controlling the conduction intervals of the switching transistors $Q_1$ and $Q_2$ with a timing $t_{ON}$ which is obtained by comparing a saw-tooth wave voltage $e_{CT}$ synchronous with the zero point of the current $i_L$ and the output of the error amplifier for amplifying the output feedback voltage.

As described above, according to the present embodiment, the D.C. voltage is brought into the rectangular wave by the switching elements and then converted into the sinusoidal wave by the resonance circuit so as to supply the various power sources. Therefore, the following advantages are brought forth:

(a) Since the cleaning lamp is lit up by the stabilized high-frequency voltage, it has its brightness stabilized, and since it is lit up at the high frequency, it involves no flickering. In addition, owing to the high-frequency drive, a stabilizer may be very small in size. Further, since the drive voltage is sinusoidal, high-frequency noise from wiring etc. do not develop.

(b) Since the D.C. high-voltage output is obtained merely by boosting and rectifying the stabilized sinusoidal high-frequency voltage, neither a switching circuit nor a stabilizing circuit for the high voltage is required, and the power source device becomes small in size and low in price. Further, since the drive voltage includes no high frequency, a stable output is provided without being affected by a tuning characteristic inherent in the boosting transformer.

(c) The A.C. output voltage necessary for the fluorescent indicating lamp is readily obtained and includes no high frequency, so that high-frequency noise from wiring etc. do not develop.

(d) Since the low-voltage outputs of +5 V and +24 V are obtained by rectifying the sinusoidal wave, spike noise observed in the rectification of a rectangular wave, etc. develop very little, and a circuit for the countermeasure against them is unnecessary.

(e) The identical transformer is shared for the current feedback and PWM control for the self-oscillation and also the synchronous signal detection for the synchronism with the resonance circuit, so that the circuit arrangement is simplified and that the device can be made small in size.

(f) Since the power supply input circuit can cope with 100 V and 200 V merely through the change-over thereof, any special component for 100 V or 200 V is not required. (g) Since the device is controlled so as to turn "on" the inverter when the output current of the resonance circuit is null, the efficiency of power supply or the ratio of the input wattage/output wattage of the power source device can be held at about 70 %. If the synchronous detector is not disposed, the efficiency of the power supply will become about 50 %.

- 1 -

CLAIMS:

1. A power source device comprising a first rectifier (201) circuit which converts a voltage of an A.C. power supply into a D.C. voltage, a switching circuit (202) which converts said D.C. voltage into a high-frequency A.C. voltage, a waveform converter circuit (203) which converts said high-frequency A.C. voltage into a sinusoidal A.C. voltage, a synchronous detector circuit (204) which detects a point of time at which an output current of said waveform converter circuit (203) becomes zero, and a pulse width control circuit (205) which controls "on" and "off" said switching circuit (202) in synchronism with the zero point of said output current.

2. A power source device according to Claim 1, further comprising a transformer (206) which transforms the output voltage of said waveform converter circuit (203) and delivers the transformed voltage, a boosting rectifier (207) which is connected to said transformer (206) and which boosts said transformed voltage and rectifies the boosted voltage, a second rectifier (208) circuit which is connected to said transformer and which rectifies the output voltage and delivers the rectified voltage, and a high-frequency circuit (209) which stabilizes said output voltage and delivers the stabilized voltage.

3. A power source device according to Claim 1, wherein said switching circuit (202) includes a start circuit for starting it.

4. A power source device according to Claim 1, wherein said switching circuit (2o2) is connected to the pulse width controller (2o5) through a control transformer $(T_2)$, and the switching means is turned "on" in synchronism with an output signal which is provided from said pulse width controller (2o5) through said control transformer $(T_2)$.

5. A power source device according to Claim 1, wherein said waveform converter circuit (2o3) is provided with a transformer $(T_1)$ which transforms the output signal thereof and delivers the transformed signal, and said pulse width control circuit (2o5) controls the switching circuit (2o2) to turn "off" through a control transformer $(T_2)$ in response to the output signal of said transformer $(T_1)$.

# FIG. 1 PRIOR ART

## FIG. 2

FIG. 3

4/6

**FIG. 4**

# FIG. 5

6/6

# FIG. 6

(A) Q₁ ON

(B) Q₂ ON

(C) Q₂Vc-E

(D) iL

(E) e₁

(F) ed

(G) es

COMPARISON VOLTAGE OF COMPARATOR 52

EA OUTPUT

(H) ecT

ton

(I) Q₁₁ ON